# EUROPÄISCHE PATENTANMELDUNG

(11) **EP 2 333 941 A2**
(43) Veröffentlichungstag der Anmeldung: **15.06.2011**
(21) Anmeldenummer: 10015422.8
(22) Anmeldetag: 08.12.2010
(51) Int. Cl.: H02K 7/116, H02K 5/18

(54) **Antriebseinheit für elektromotorisch angetriebene Ventilatoren**

(30) Priorität: 08.12.2009 DE 102009057116
(71) Anmelder: C.H. Schäfer Getriebe GmbH, 01896 Ohorn (DE)
(72) Erfinder: Porstmann Roberto, 01259 Dresden (DE)
(74) Vertreter: Auerbach, Bettina

(57) **Zusammenfassung**

Die Erfindung betrifft ein Antriebskonzept mittels eines Planetengetriebes für elektromotorische Ventilatorenantriebe für den Einsatz in Kühltürmen, Wärmetauschern und Dampfkondensatoren. Der Erfindung liegt die Aufgabe zu Grunde mittels eines Planetengetriebes eine koaxiale Verbindung zwischen der Welle eines Elektromotor und der Bohrungsnabe eines Ventilator herzustellen. Vom Planetengetriebe werden dabei axiale und radiale Kräfte des Ventilators aufgenommen. Die Getriebekühlung erfolgt durch Ausnutzung des durch den Ventilator erzeugten Luftstrom über das Getriebegehäuse mit integrierten Ventilationsschlitzen. Die Montage der kompletten Antriebseinheit bestehend aus Motor, Planetengetriebe, Kupplung und Ventilator erfolgt rechtwinklig zur Antriebsachse über einen Getriebegehäuseflansch.

## Beschreibung

Die vorliegende Erfindung betrifft eine Antriebseinheit für elektromotorisch angetriebene Ventilatoren mit Leistungsklassen bis 200 KW für den industriellen Einsatz in Kühltürmen, Wärmetauschern und Dampfkondensatoren.

Bekannt sind Antriebskonzepte für Kühltürme, Wärmetauscher und Dampfkondensatoren mit Kegel- und Kegelstirnradgetrieben, bei denen der Elektromotor und der Ventilator rechtwinklig zueinander angeordnet sind.
Bekannt sind weiterhin Antriebskonzepte für den beschriebenen Anwendungsfall mit Stirnradgetrieben bei denen das Getriebe parallel zur Antriebsachse montiert wird. Bekannt für den beschriebenen Einsatzfall sind Antriebskonzepte mit Keilriemen für Motorleistungen bis ca. 40 kW.
Nachteil dieser bekannten Lösungen ist die durch die asymmetrische Anordnung der Antriebsachse zur Lüfterachse entstehenden Schwingungen bei größeren Leistungsklassen, so dass durch zahlreiche kostenverursachende Maßnahmen, wie die zusätzliche Anordnung von komplizierten Kraftaufnahmen, welche diese Schwingungen ausgeglichen müssen, notwendig. Dadurch sind derartige Lösungen kostenintensiv oder nur vorrangig bei kleineren Leistungsklassen unter 40 KW anwendbar.

Der Erfindung liegt deshalb die Aufgabe zu Grunde eine kostengünstige, einfache und dennoch schwingungsarme Konstruktion einer Antriebseinheit für elektromotorisch angetriebene Ventilatoren, bestehend aus Motor, Getriebe und Lüfteraufhängung zu schaffen, wobei die Antriebe für Leistungsklassen bis zu 200 KW einsatzfähig gestaltet werden sollen.

Erfindungsgemäß wird die Aufgabe durch die Merkmale des Anspruchs 1 gelöst, wobei die vorteilhaften Ausgestaltungen in den Unteransprüchen beschrieben sind.
Danach ist bei der erfindungsgemäßen Antriebseinheit für elektromotorisch angetriebene Ventilatoren mit Leistungsklassen bis zu 200 KW für den Einsatz in Kühltürmen, Wärmetauschern und Damptkondensatoren, als Getriebeeinheit ein Planetengetriebe angeordnet ist, wobei die Rotationswelle des Elektromotors, des Planetengetriebes als auch die des Ventilators koaxial zueinander angeordnet sind. Das Planetengetriebe kann sowohl 1- oder 2-stufig ausgelegt sein. Zur Montage der gesamten Antriebseinheit an eine Rahmenkonstruktion ist am Planetengetriebe im rechten Winkel zur Antriebsachse am äußeren Umfang des Getriebegehäuses ein zur Montage der Antriebseinheit dienender Getriebeflansch angeordnet. Auf grund der koaxialen Anordnung der Rotationswellen und der umfänglich symmetrischen Anordnung eines Getriebeflansches ist eine schwingungsarme Antriebseinheit für Ventilatoren geschaffen, welche zudem noch eine schwingungsarme Anordnung in einer Rahmenkonstruktion ermöglicht, wobei sich zusätzliche Kraftübertragungselemente erübrigen.

Zur gleichzeitigen Kühlung des Planetengetriebes sind an der Getriebegehäuseperipherie gleichzeitig als Stützrippen dienende Kühlrippen parallel zur Antriebsachse lammellenförmig angeordnet.
Zusätzlich sind im Gehäuseflansch zusätzlich der Kühlung dienende Ventilationsschlitze angeordnet, um die sind die technisch bedingte Verlustwärme des Getriebes effizient abzuführen.
Vorteilhafter Weise kann das Planetengetriebe einteilig oder zur modularen Aufbaugestaltung für verschiedene Anschlüsse, mehrteilig ausgebildet sein.
Eine koaxiale Verbindung zwischen der Welle eines Elektromotors und der Bohrungsnabe eines Ventilator ist dann von Vorteil, wenn der Einsatz eines Getriebes erforderlich wird. Dabei müssen vom Getriebe axiale und radiale Kräfte des Ventilators aufgenommen, die technisch bedingte Verlustwärme - resultierend aus dem Wirkungsgrad des Getriebes - über das Getriebegehäuse ohne Zusatzkühlung abgeführt und die komplette Antriebseinheit über einen am Getriebe integrierten Gehäuseflansch an die Anschlusskonstruktion montierbar sein. Diese Vorteile sind mit der vorliegenden erfinderischen Lösung realisiert.
Das erfindungsgemäße Antriebskonzept ist für Motorleistung bis maximal 200 kW anwendbar.
Das Erfordernis zum Einsatz eines Getriebes ist bedingt durch die Baugröße des Ventilator und tritt bei Ventilatordrehzahlen ein, die nicht oder mit höherem Aufwand durch eine elektronische Drehzahlreglung erreicht werden.
Der wirtschaftliche Effekt mit dem Einsatz des Planetengetriebes lässt sich in Kombination der nachfolgender Gegebenheiten darstellen:
- Mit dem Einsatz des Planetengetriebes wird die Verwendung kleinerer Motoren gegenüber einem Direktantrieb (Lüfter direkt, ohne Untersetzung auf Motorwelle montiert) ohne Getriebe ermöglicht.
- Der durch den Ventilator hervorgerufene Luftstrom und eine spezielle Gehäusegestaltung ermöglichen eine ausreichende Konvektionsleistung zur Sicherstellung einer zulässigen Betriebstemperatur, wodurch auf die Installation einer Zusatzkühlung für das Getriebe verzichtet werden kann.
- Durch den Gehäuseflansch kann die komplette Antriebseinheit bestehend aus Motor, Getriebe und Kupplung in eine im Vergleich zu herkömmlichen vereinfachte Anschlusskonstruktion montiert werden.

Die vorliegende Erfindung wird anhand von zwei Ausführungsbeispielen näher erläutert.
In der beigefügten Zeichnung zeigen :
- Fig. 1: eine Antriebseinheit mit einem Planetengetriebe in kompakter einteiliger Gehäuseausführung und
- Fig. 2: eine Antriebseinheit mit einem Planetengetriebe in zweigeteilter Gehäuseausführung.

### Ausführungsbeispiel 1:

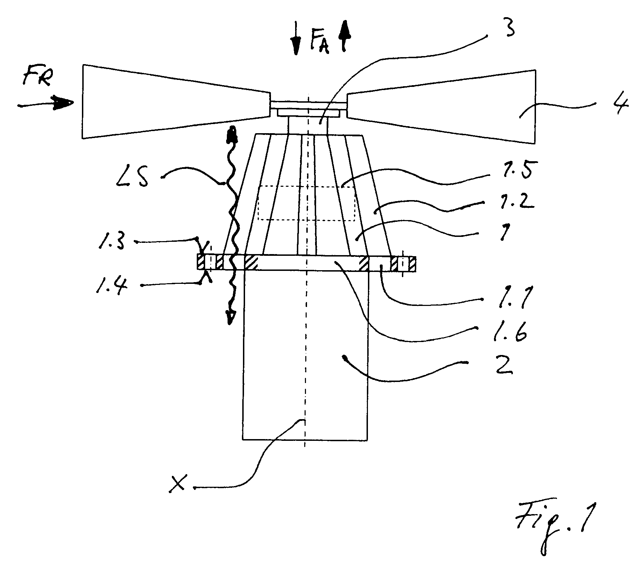

Gemäß der Figur 1 weist die erfindungsgemäße Antriebseinheit für elektromotorisch angetriebene Ventilatoren eine einteilige kompakte Gehäuseausführung eines Planetengetriebes auf, bei der die Planetenstufen mit feststehendem Hohlrad innerhalb der Gehäuseeinheit montiert sind. Motor 2, Getriebe 1 , Kupplungsflansch 3 und Ventilator 4 sind koaxial angeordnet. Das Getriebe 1 kann axiale Belastungen (FA) in beide Richtungen der Antriebsachse X aufnehmen. Die Anordnung von Stütz- und Kühlrippen 1.2 an der äußeren Peripherie des Getriebegehäuses gestattet zum einen die Aufnahme von Radiallasten (FR) und dient zum Anderen der Wärmekonvektion zur Sicherstellung einer zulässigen Betriebstemperatur. Ventilationsschlitze 1.1 am Gehäuseflansch 1.6 ermöglichen es, den durch den Ventilator 4 erzeugten Luftstrom (LS) zur Kühlung des Getriebes zu nutzen. Die Montage der Antriebseinheit an die Anschlusskonstruktion kann entweder an der oberen Fläche 1.3 oder an der unteren Fläche 1.4 am Gehäuseflansch 1.6 erfolgen.

### Ausführungsbeispiel 2:

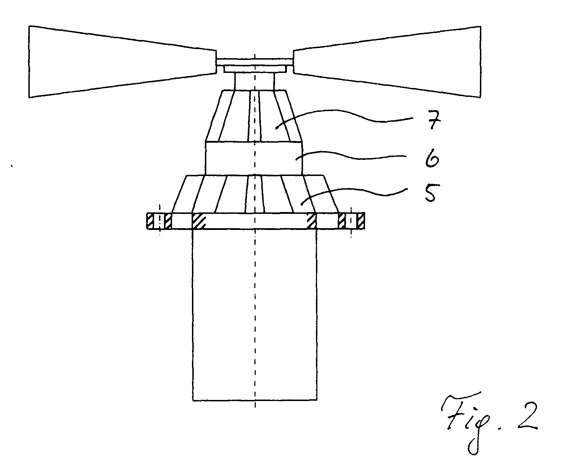

Gemäß der Figur 2 ist eine Antriebseinheit für elektromotorisch angetriebene Ventilatoren mit einem Planetengetriebe in geteilter Gehäuseausführung ausgebildet, wobei die Planetenstufe(n) mit feststehendem Hohlrad (6) zwischen einem Motorflanschgehäuse (5) und einem Abtriebsgehäuse (7) montiert sind. Der funktionale Aufbau des Antriebskonzeptes entspricht dem unter Fig. 1 beschriebenen.

### Bezugszeichenliste

- 1: Getriebe
- 1.1: Ventilationsschlitze
- 1.2: Kühl- und Stützrippen
- 1.3: obere Gehäuseflanschfläche
- 1.4: untere Gehäuseflanschfläche
- 1.6: Gehäuseflansch
- 2: Motor
- 3: Kupplungsflansch
- 4: Ventilator
- 5: Motorflanschgehäuse
- 6: Hohlrad
- 7: Antriebsgehäuse

## Patentansprüche

1. Antriebseinheit für elektromotorisch angetriebene Ventilatoren mit Leistungsklassen bis 200 KW für den Einsatz in Kühltürmen, Wärmetauschern und Dampfkondensatoren, **dadurch gekennzeichnet, dass** als Getriebeeinheit ein Planetengetriebe angeordnet ist, wobei die Rotationswelle des Elektromotors, des Planetengetriebes als auch die des Ventilators koaxial zueinander angeordnet sind.

2. Antriebseinheit für elektromotorisch angetriebene Ventilatoren nach dem Anspruch 1, **dadurch gekennzeichnet, dass** das Planetengetriebe 1- oder 2-stufig ausgelegt ist.

3. Antriebseinheit für elektromotorisch angetriebene Ventilatoren nach einem der Ansprüche 1 und 2, **dadurch gekennzeichnet, dass** am Planetengetriebe im rechten Winkel zur Antriebsachse am äußeren Umfang des Getriebegehäuses ein zur Montage der Antriebseinheit dienender Getriebeflansch angeordnet ist.

4. Antriebseinheit für elektromotorisch angetriebene Ventilatoren nach einem der Ansprüche 1 bis 3, **dadurch gekennzeichnet, dass** an der Getriebegehäuseperipherie gleichzeitig als Stützrippen dienende Kühlrippen parallel zur Antriebsachse lammellenförmig angeordnet sind.

5. Antriebseinheit für elektromotorisch angetriebene Ventilatoren nach einem der Ansprüche 1 bis 4, **dadurch gekennzeichnet, dass** im Gehäuseflansch (1.6) zusätzlich der Kühlung dienende Ventilationsschlitze (1.1)) angeordnet sind.

6. Antriebseinheit für elektromotorisch angetriebene Ventilatoren nach einem der Ansprüche 1 bis 5, **dadurch gekennzeichnet, dass** das Planetengetriebe einteilig ausgebildet ist.

7. Antriebseinheit für elektromotorisch angetriebene Ventilatoren nach einem der Ansprüche 1 bis 5, **dadurch gekennzeichnet, dass** das Planetengetriebe mehrteilig ausgebildet ist.
